# EUROPEAN PATENT SPECIFICATION

(11) **EP 3 529 495 B1**
(45) Date of publication and mention of the grant of the patent: **23.03.2022**
(21) Application number: 17798316.0
(22) Date of filing: 12.10.2017
(51) Int. Cl.: F04D 15/00, F01P 3/20, F01P 7/14, F16K 11/00

(54) **A REGULATION ASSEMBLY OF A WATER PUMP GROUP FOR A COOLING SYSTEM OF A VEHICLE**
EIN REGULATIONSMECHANISMUS EINER WASSERPUMPE FÜR EIN KÜHLSYSTEM DES FAHRZEUGMOTORS
SYSTÈME DE RÉGULATION D'UNE POMPE À EAU POUR LE REFROISDISSEMENT D'UN VÉHICULE

(30) Priority: 18.10.2016 IT 201600104206
(43) Date of publication of application: 28.08.2019
(73) Proprietor: Industrie Saleri Italo S.P.A., 25065 Lumezzane, Brescia (IT)
(72) Inventor: SURACE, Alfonso, 25065 Lumezzane (Brescia) (IT); FERRETTI, Andrea, 25065 Lumezzane (Brescia) (IT)
(74) Representative: Gamba, Alessandro
(86) International application number: PCT/IB2017/056314
(87) International publication number: WO 2018/073704

(56) References cited:
- GB-A- 802 154
- GB-A- 1 155 115
- US-A- 5 503 118

## Description

The present invention relates to a regulation assembly of a water pump group for a vehicle cooling system Additionally, the present invention relates to a water pump group comprising the regulation assembly and the cool ing syst em comprising the regul at ion assembly.

In vehicle cooling syst errs, it is well known that particular attention must be paid to the design and operation of the components that regul at e the amount of cooling liquid circulating in the ducts of the system in addition to a careful arrangement of said ducts.

More specifically, it is of fundamental importance to regul ate the amount of cooling liquid both to the engine and to other component s of the vehicle. In the same way, it is of fundamental importance to regulate the amount of cooling liquid to specific components of the engine itself, for example, to the crankcase or exhaust gas recirculation system also known as the EGR system

For these reasons, it is easy to understand how, in such context, the pump groups and/or the regulation assemblies included in the cooling systems take on fundamental importance. Examples of known regulation assemblies are disclosed in documents GB1155115A, US5503118A and GB802154A.

In particular, one of the main problems addressed is to be able, when necessary, to achieve an effective cooling of the engine and its parts and other components served by the cooling system. For example, depending on the conditions in which the vehicle operates, that is, depending on how the vehicle is used and depending on the ambient conditions, the amount of cooling liquid circulating in the system must be regulated, for example by cooling the engine when running at full speed and not cooling it when it has just been started and is still in the warm-up stage or at the end of the vehicle's use in the post-run stage.

Similarly, depending on the conditions in which the vehicle operates, for the other vehicle components, such as the intercooler, times when high cooling is required and other times when it is preferable not to deliver cooling liquid are determined.

In other words, the need is particularly felt to provide, for the cooling system, a regulation assembly suitable to efficiently and effectively regulate the amount of cooling liquid to one or more predefined components of the vehicle.

In accordance with the foregoing, it is emphasized that by directing a quantity of liquid to a component, the pressure of the cooling liquid frequently causes an ineffective regulation of the amount of cooling liquid to another corrponent.

In other words, it is of fundamental importance to respond to the need for a regul at ion assembly with optimized operation, i.e. functioning in an optimal manner regardless of the amount of cooling liquid that is directed towards one duct of the system rather than another.

The object of the present invention is to provide a regulation assembly that solves such a problem of the known art. In other words, the object of the present invention is to provide a regulation assembly wherein it is possible to regulate in a custom zed way, i.e. according to the requirements and as the conditions of use of the vehicle vary, the cooling mode of the engine, or a portion thereof, or of other components of the vehicle served by the cooling syst em operating optimally regardless of the regulation of one component rather than another.

Such object is achieved by means of the regul at ion assembly claimed in claim1. In addition, such object is achieved by the pump group claimed in claim 15 and the cooling system claimed in claim 16. Further advantages and embodiments of the present invention will be apparent from the dependent claims of the accompanying set of claims.

In addition, the features and advantages of the regulation assembly, the pump group and the cooling system will be apparent from the description provided hereinafter by way of non-limiting example in accordance with the attached figures, wherein:

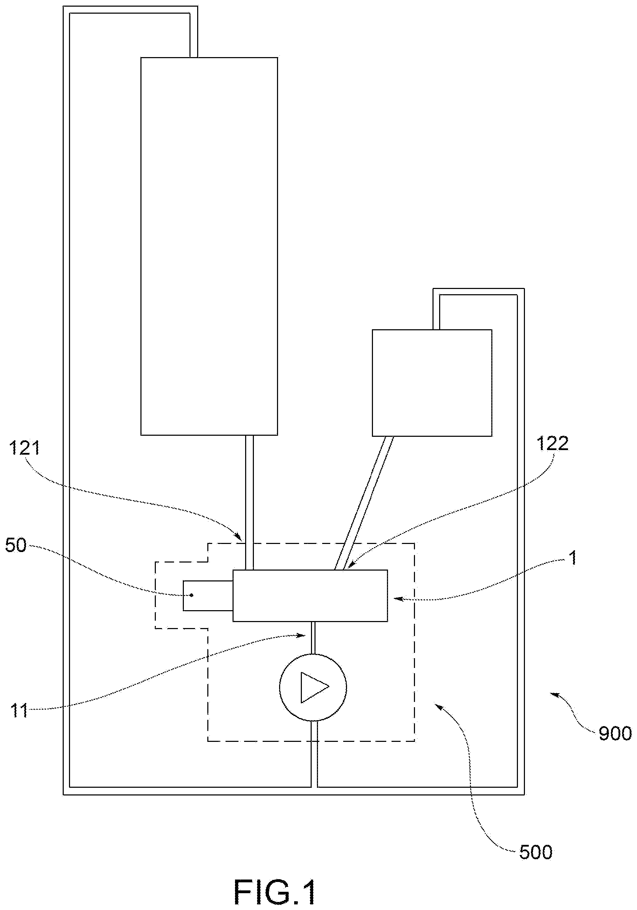

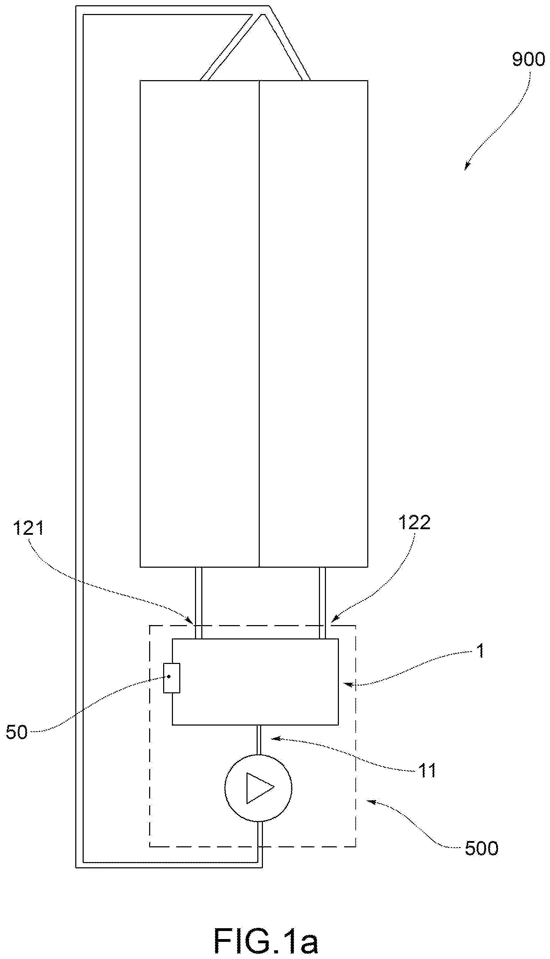

- figure 1 shows a diagram of a cooling system of a vehicle according to the present invention, comprising a regulation assembly suitable to regulate the cooling of the engine of the vehicle and/or other components external thereto;
- figure 1a shows another diagram of a cooling system of a vehicle according to the present invention, comprising a regulation assembly suitable to regulate the cooling of specific portions of the engine;
- figures 2a, 2b and 2c respectively represent two views in perspective and a top view of a pump group according to a preferred embodiment, comprising a regulation assembly according to a preferred embodiment;
- figure 3 shows a perspective view of the regulation assembly according to a preferred embodiment;
- figures 3a and 3b illustrate two perspective views in separate parts of the regulation assembly shown in figure 3;
- figure 4 shows a perspective view of the regulation means comprised in the regulation assembly of figures 3, 3a and 3b;
- figures 5, 5' and 6, 6' respectively show two sectional views of the regulation assembly of figure 3, in two different configurations, and the respective enlargements of the regulation means comprised therein;
- figure 7 shows a perspective view of the regulation assembly according to a second preferred embodiment;
- figures 7a and 7b show two perspective views in separate parts of the regulation assembly shown in figure 7;
- figure 8 shows a perspective view of the regulation means comprised in the regulation assembly of figures 7, 7a and 7b;
- figures 9, 9' and 10, 10' respectively show two sectional views of the regulation assembly of figure 3, in two different configurations, and the respective enlargements of the regulation means comprised therein;
- figures 11, 11', 11" show respectively two perspective views and one lateral view of the regulation assembly according to a third preferred embodiment;
- figure 12 shows a perspective view of the regulation means comprised in the regulation assembly of figures 11, 11' and 11";
- figures 13a and 13b show two lateral views of the regulation means of figure 12;
- figures 14a and 14b show two sectional views of the regulation means of figures 12, 13a and 13b;
- figures 15a, 15b and 15c respectively show a perspective view and a side view of a pump group according to a preferred embodiment, comprising a regulation assembly according to a fourth preferred embodiment;
- figures 16a and 16b show two views in perspective of the regulation assembly shown in figures 15a, 15b and 15c;
- figures 17a and 17b show two perspective views in separate parts of the regulation assembly shown in figures 16a and 16b;
- figures 18a and 18b show two perspective views of the regulation means comprised in the regulation assembly shown in figures 16a and 16b and 17a and 17b;
- figure 19 shows a sectional view of the regulation assembly shown in figures 16a and 16b and 17a and 17b;
- figures 20 and 20' are respectively a side view and a sectional view of a shutter element comprised in a regulation assembly according to a preferred embodiment.

With reference to the accompanying figures, a cooling system for a vehicle is indicated at 900. In addition, a water pump for a cooling system, e.g. comprised in the cooling system 900, is indicated at 500. In addition, a regulation assembly, which is the object of the present invention, in turn suitable to be comprised in the cooling system 900, is indicated at 1.

Preferably, as shown below, such regulation assembly 1 is, in some preferred embodiments, comprised in the pump group 500; in other words, the regulation assembly 1 is suitable to be an integral part of the pump group 500.

The regulation assembly 1, object of the present invention, is adapted to be part of a vehicle cooling system 900, being positioned downstream of said pump group 500. As described in the embodiment below, the regulation assembly 1 is comprised in the pump group 500, and is positioned downstream of its impeller.

Specifically, the regulation assembly 1 is suitable to receive inbound cooling liquid in motion by the action of the pump group 500 and to regulate a predetermined quantity of cooling liquid toward a respective duct of the cooling system 900.

In effect, the regulation assembly 1 comprises at least one inlet port 11 through which the inbound cooling liquid flows from the pump group 500 and at least two outlet ports 121, 122, 123 through which the outbound cooling liquid flows.

In other words, the regulation assembly 1 is fluidically connectable, inbound, to a pump group 500 and, outbound, to at least two components through at least two outlet ducts comprised in a cooling system 900 of a vehicle.

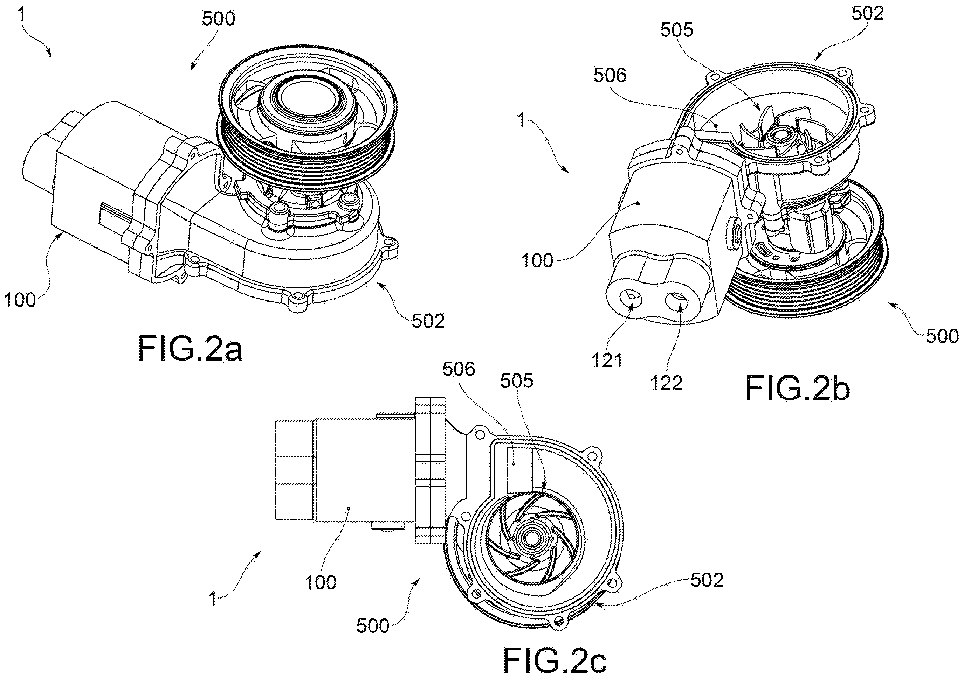

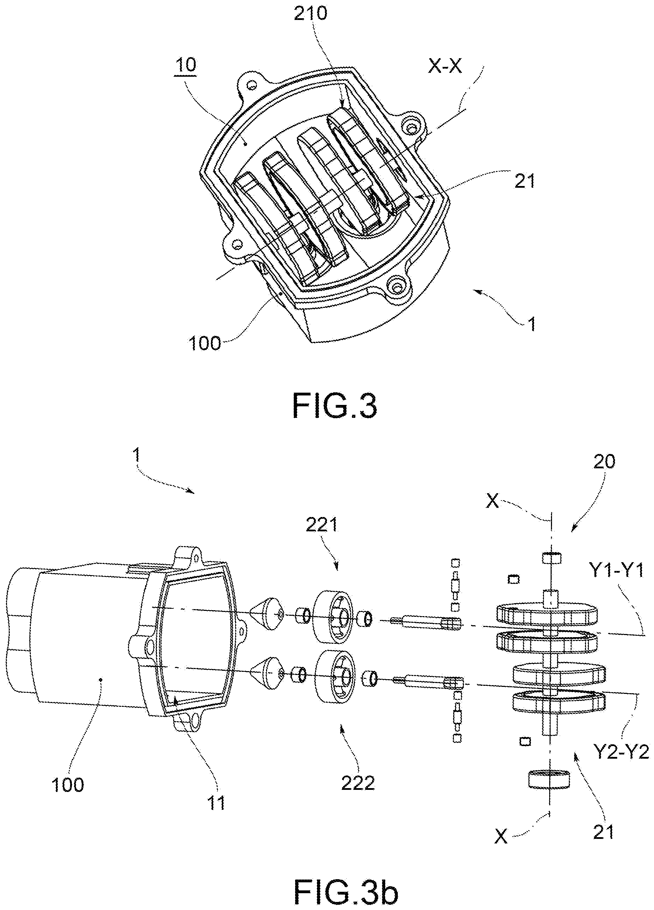

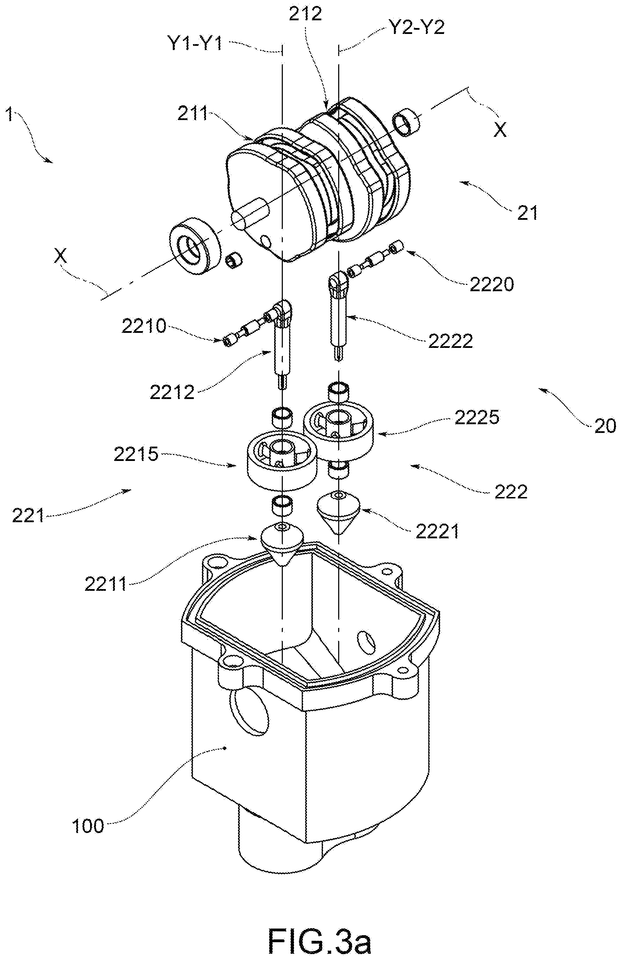

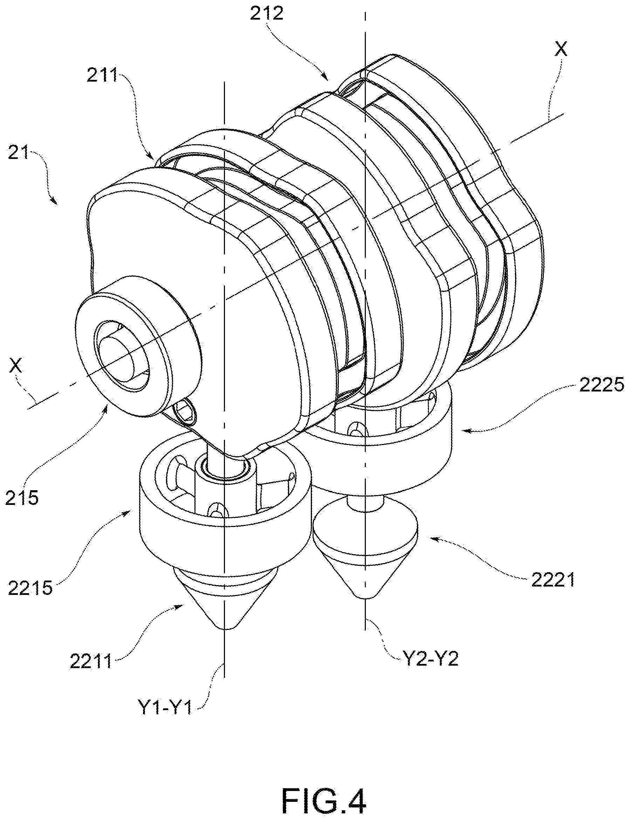

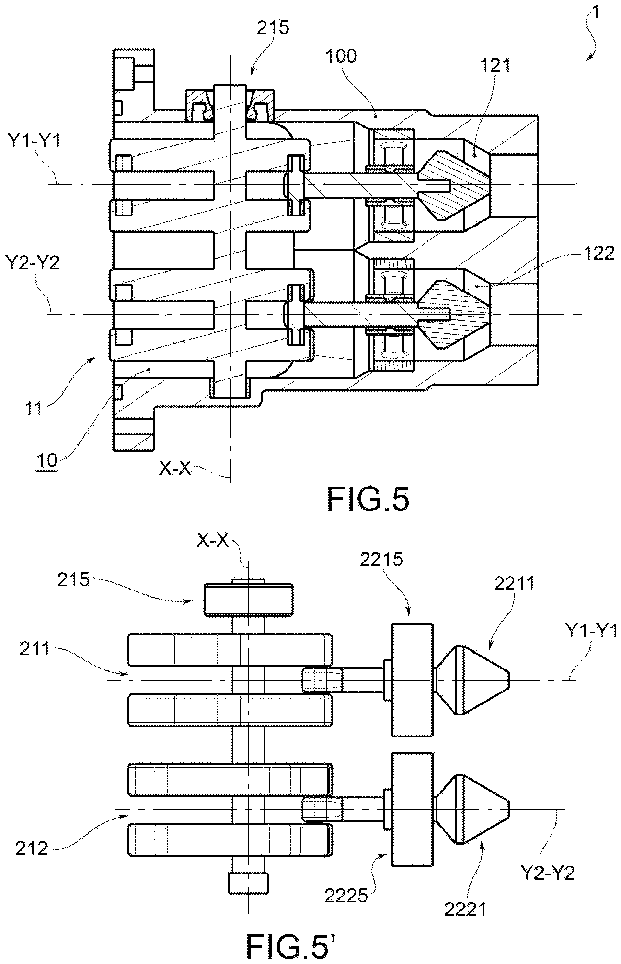

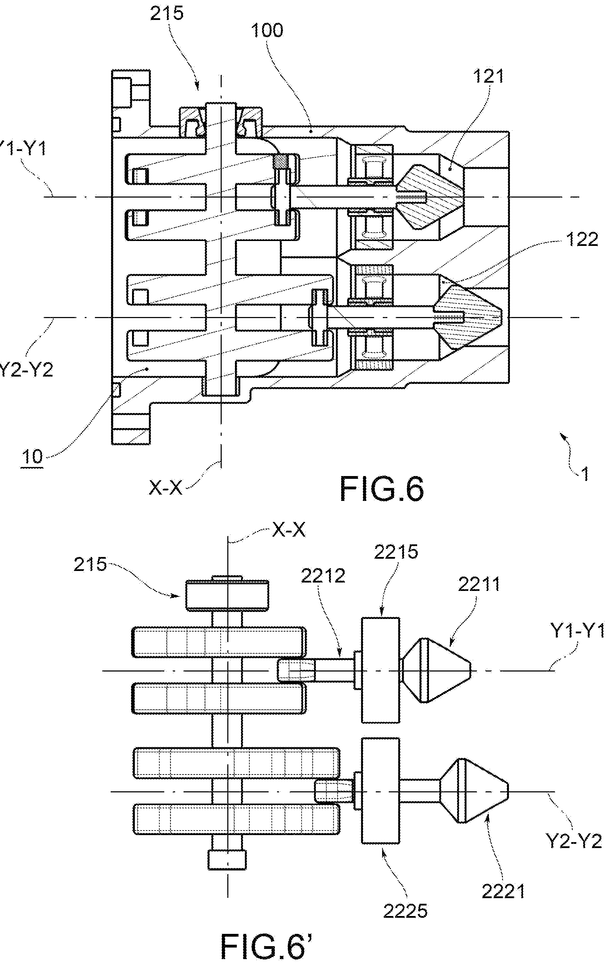

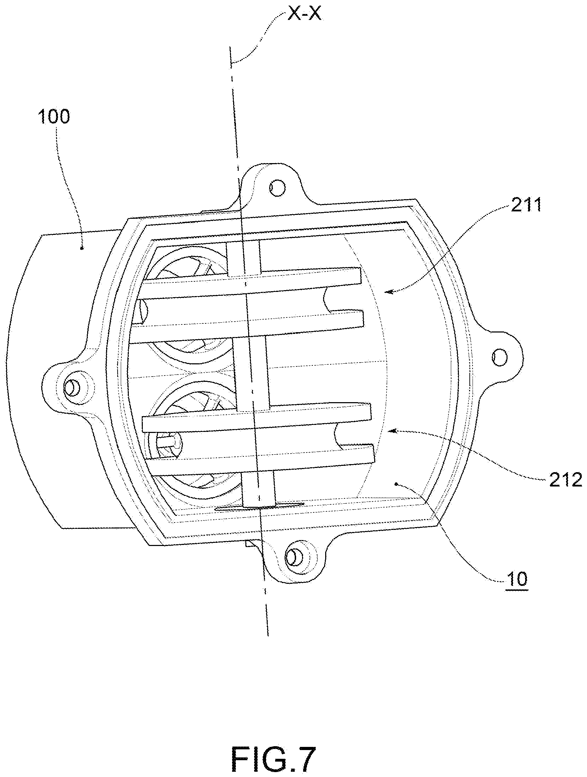

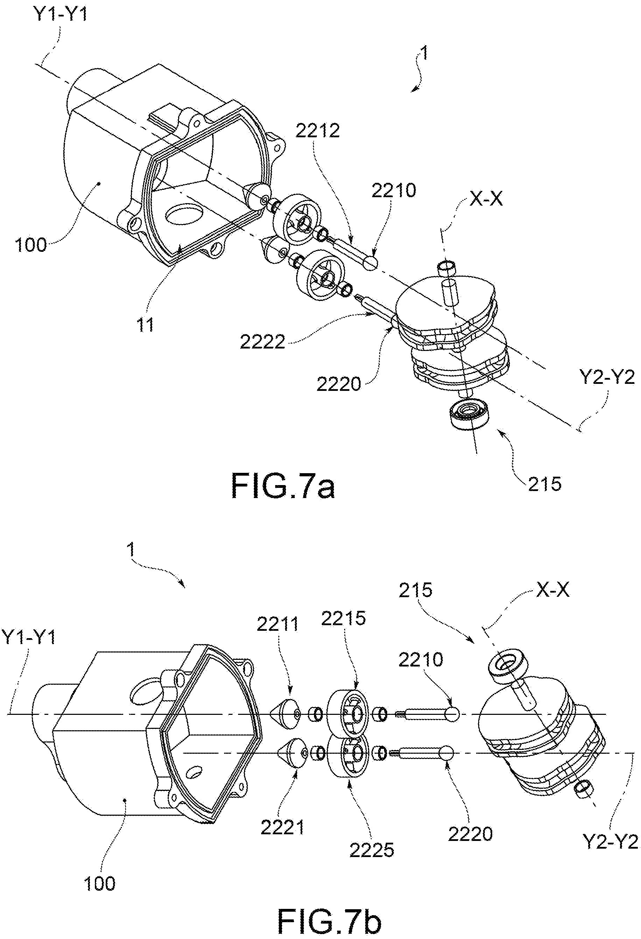

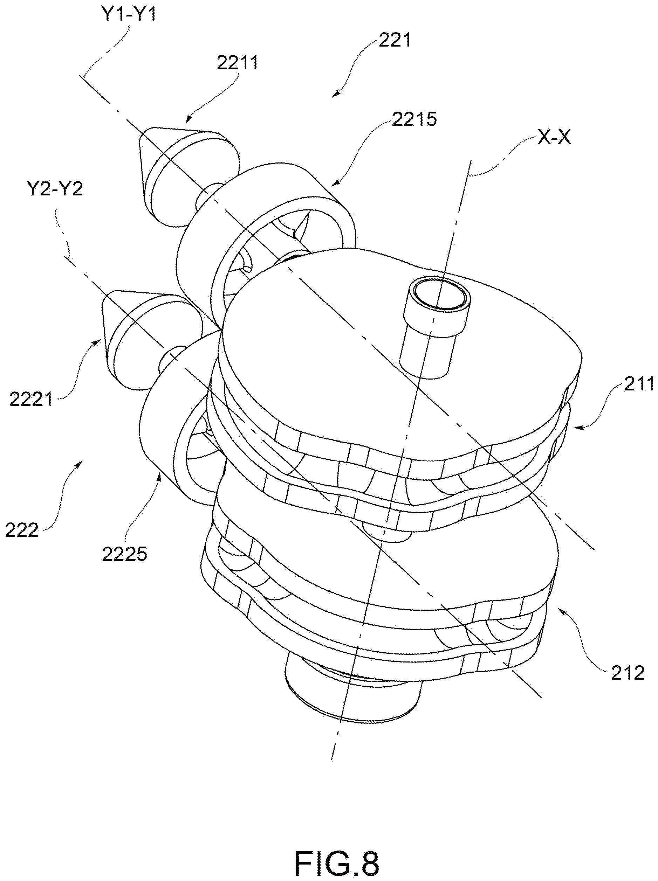

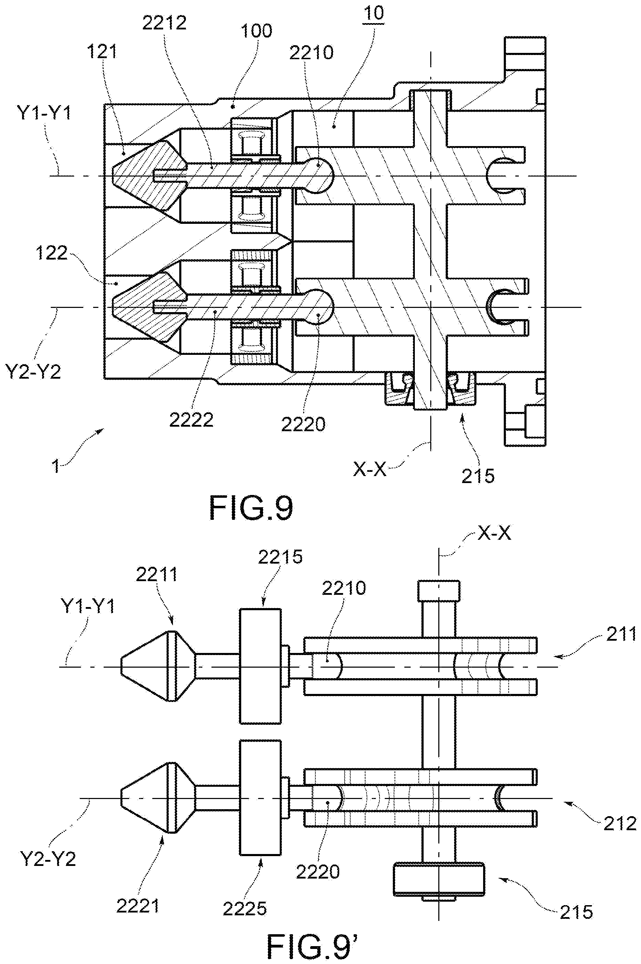

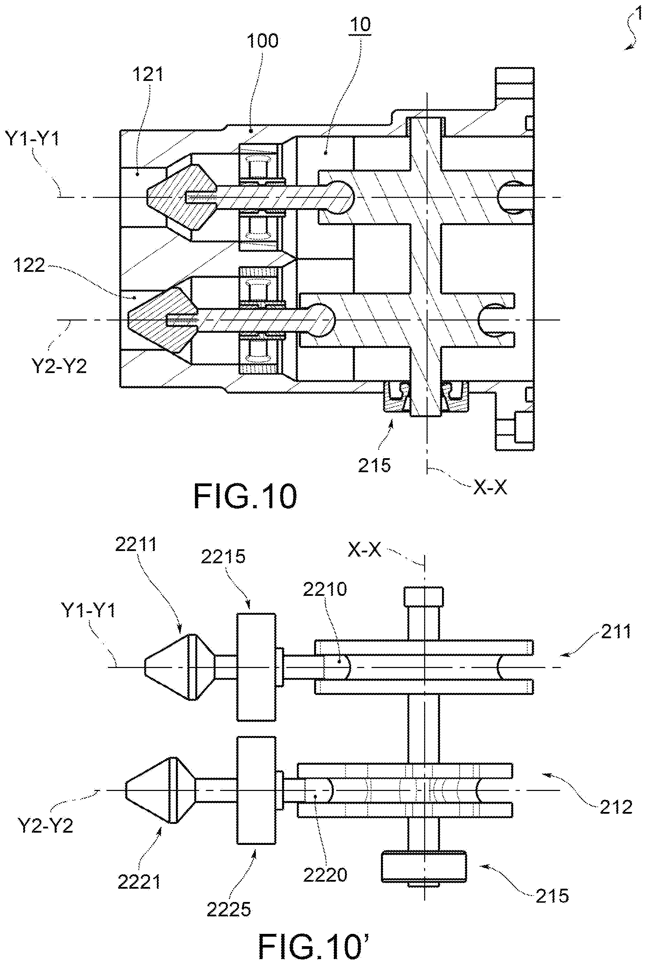

In accordance with some preferred embodiments, such as those illustrated by way of example in figures 2 to 10, the regulation assembly 1 comprises two outlet ports 121, 122 and is thus suitable to regulate the amount of cooling liquid toward a first duct or a second duct of a cooling system.

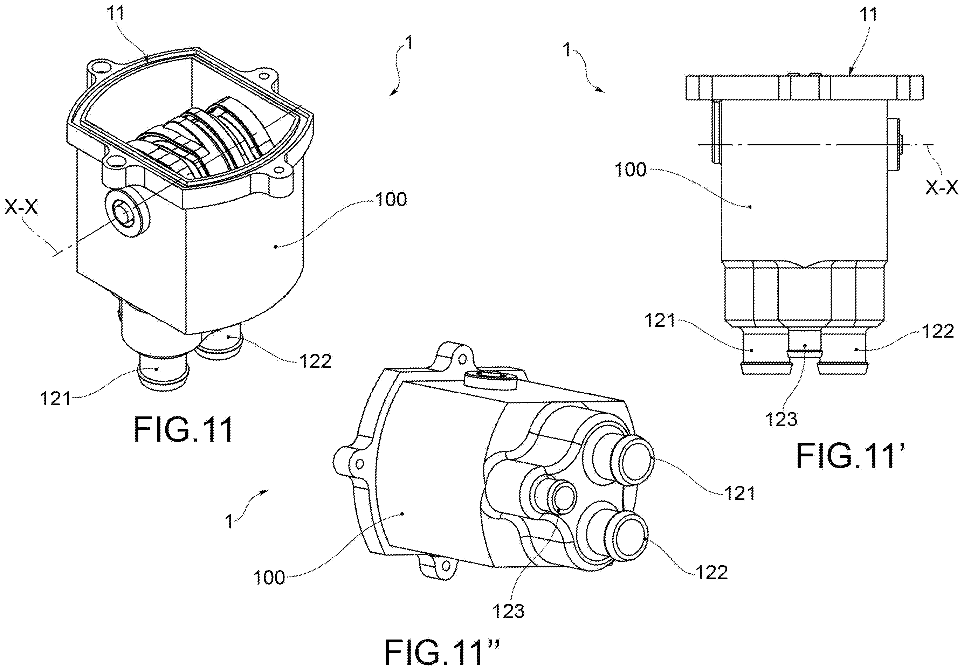

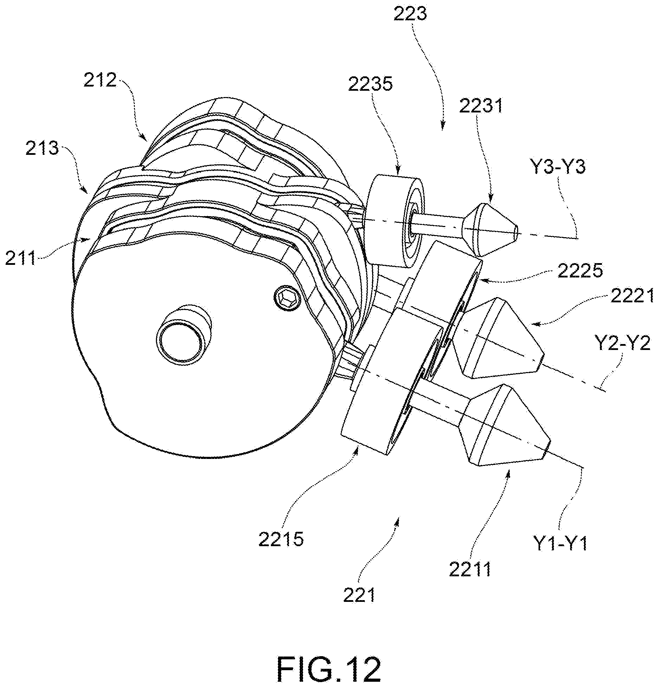

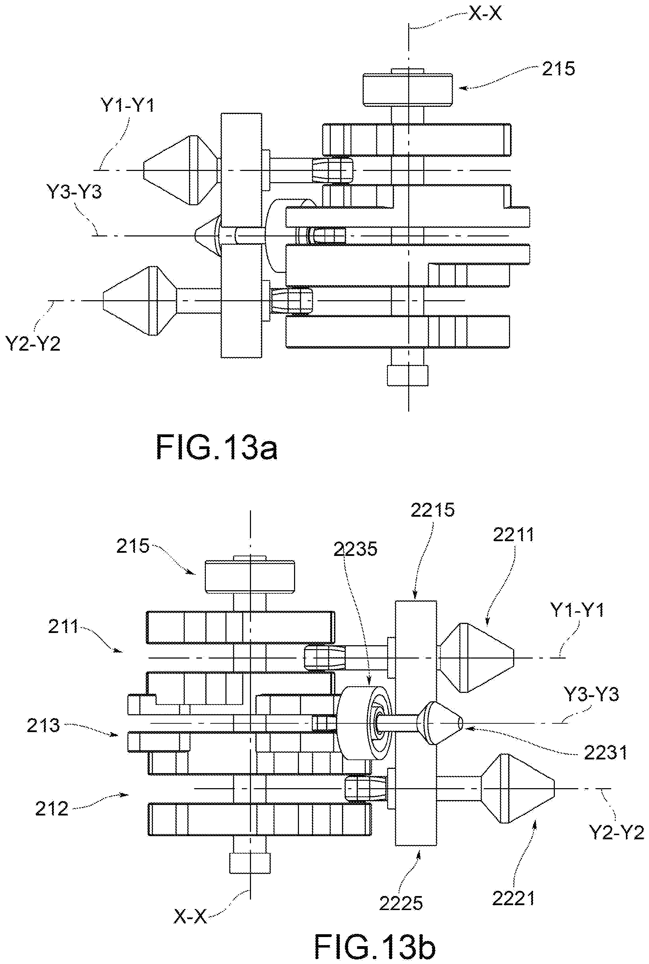

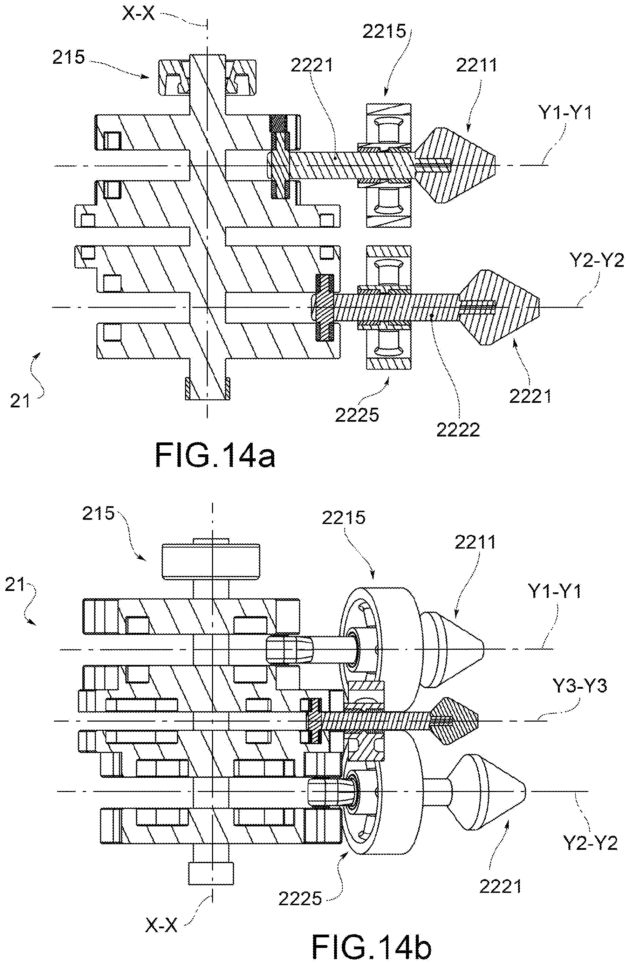

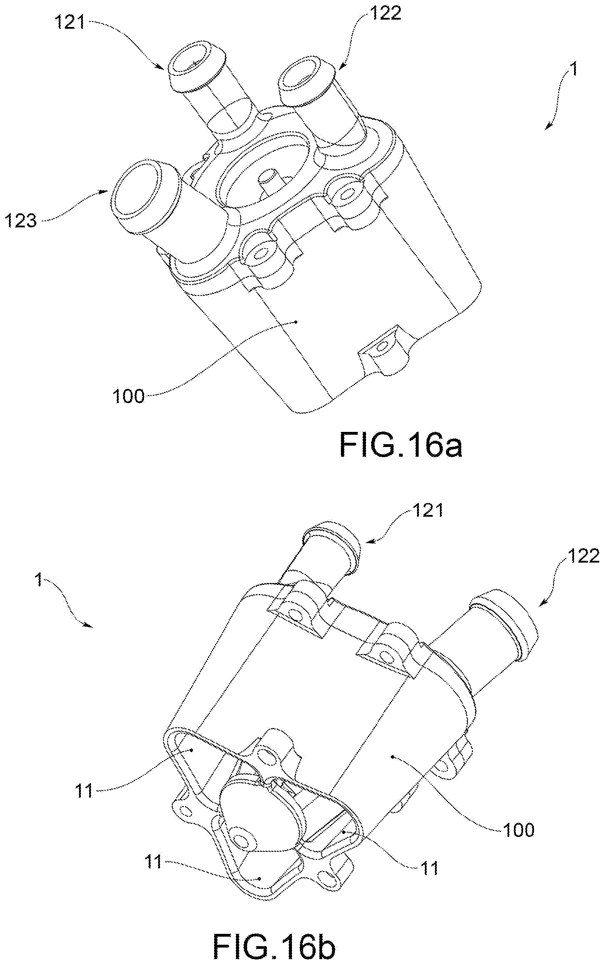

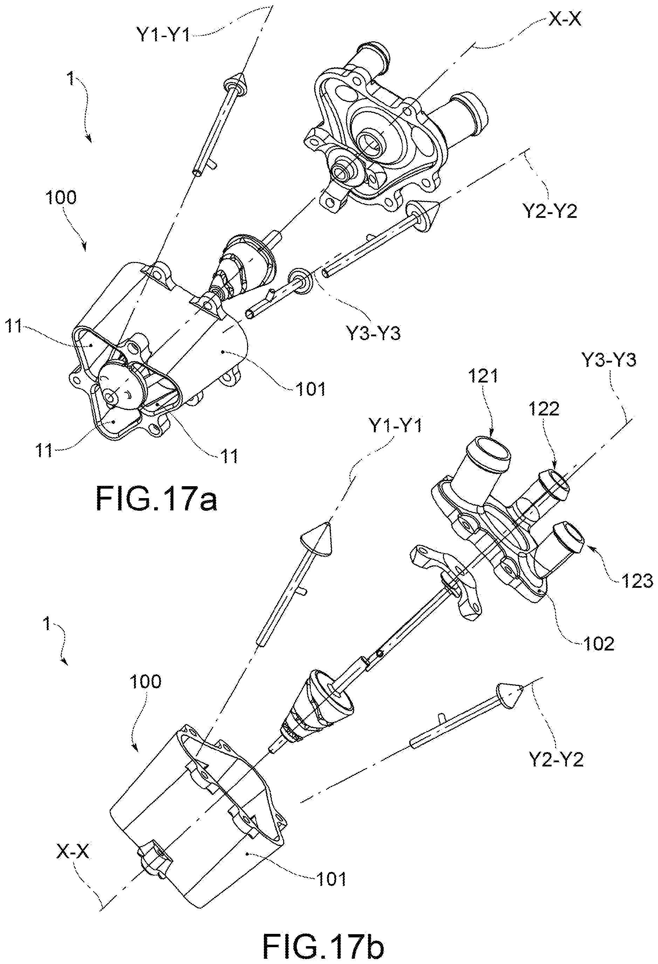

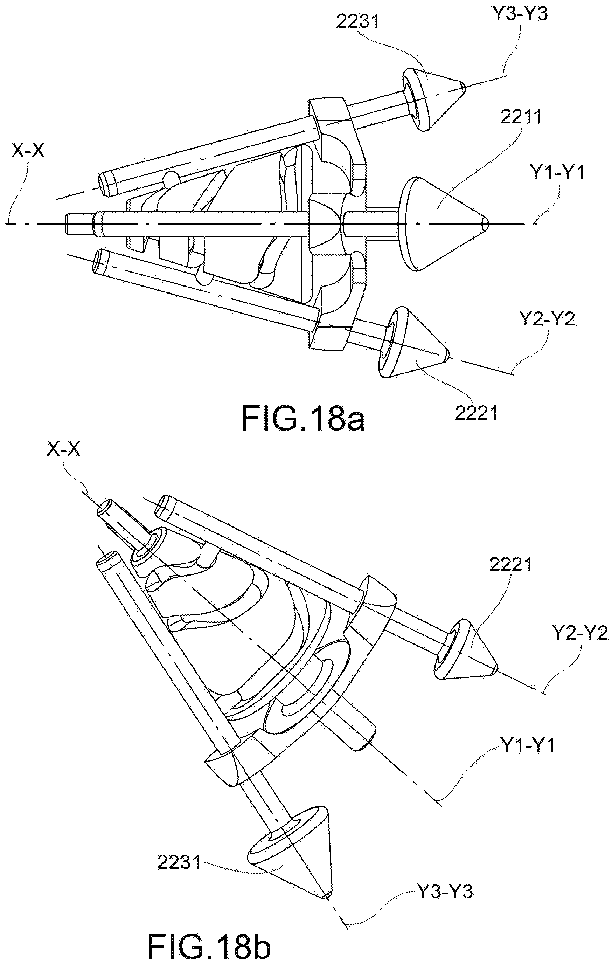

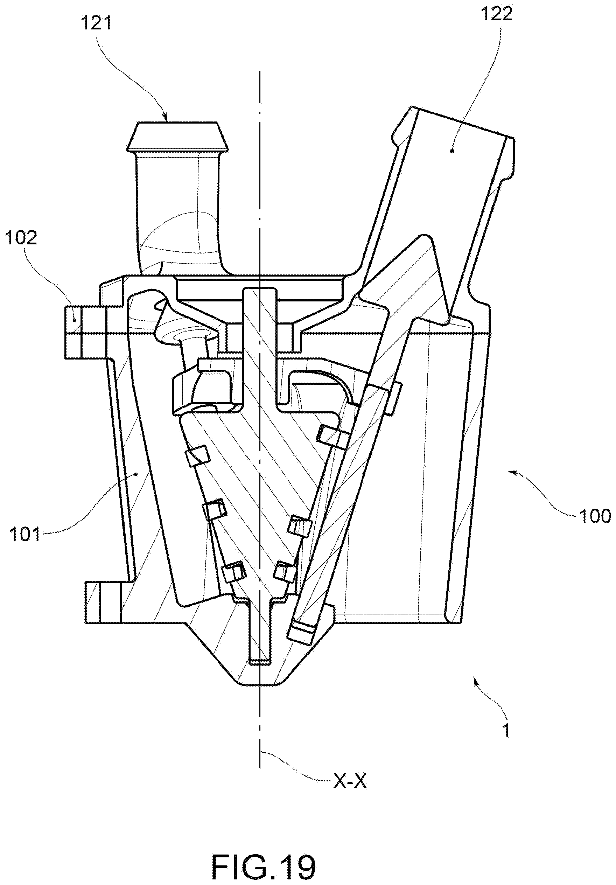

In accordance with other preferred embodiments, such as those illustrated by way of example in figures 11 to 19, the regulation assembly 1 comprises three outlet ports 121, 122, 123 and is thus suitable to regulate the amount of cooling liquid to a first duct or a second duct or a third duct of a cooling system.

Located between the at least one inlet port 11 and the outlet ports 121, 122, 123, the regulation assembly 1 comprises a regulation chamber 10 in which the cooling liquid is fluidically intercepted and the regulation is carried out.

In fact, in said regulation chamber 10, regulation means 20 of the regulation assembly 1 are housed.

In accordance with the invention, the regulation assembly 1 comprises an assembly body 100 defining said regulation chamber 10 and having said at least one inlet port 11 and at least two outlet ports 121, 122, 123. Preferably, said assembly body 100 is adapted to be sealingly connected to the pump group 500, in particular to its pump body 502, so as to create a fluid link between the two.

In accordance with some preferred embodiments, the assembly body 100 comprises two shells 101, 102, mutually connected to each other to delimit the regulation chamber 10; preferably, the at least one inlet port 11 is formed on a shell 101, while the at least two outlet ports 121, 122, 123 are formed on the other shell 102.

Said regulation means 20 comprise a plurality of shutter elements 221, 222, 223 and a regulation member 21 suitable to regulate the position of said shutter elements to thereby regulate the flow of cooling liquid.

The regulation means 20 comprise at least two shutter elements 221, 222, 223, each operating with a respective outlet port 121, 122, 123. In other words, depending on the number of outlet ports, the regulation assembly 1 comprises similar shutter elements 221, 222, 223.

Preferably, certain embodiments (not shown in the accompanying figures) are also known, wherein the regulation assembly includes an outlet port which is always open; i.e. on such outlet port no shutter element operates permitting the cooling liquid to flow unimpeded to a respective duct of the cooling system located downstream thereof. In such embodiment, the regulation assembly is thus suitable to regulate the amount of cooling liquid through the other outlet ports on which the regulation means, and in particular the shutter elements, operate.

According to the invention, each shutter element 221, 222, 223 is movable in an axial direction substantially orthogonal to the respective outlet port 121, 122, 123.

In effect, each shutter element 221, 222, 223 is movable axially between a closed position, wherein the respective outlet port on which it operates is occluded (or obstructed or sealed), a plurality of intermediate distal positions from the respective outlet port and an open position corresponding to the maximum opening of the outlet port 121, 122, 123.

In other words, each shutter element 221, 222, 223 is guidable axially from a position wherein it sealingly closes the respective outlet port 121, 122, 123 on which it operates, moving away from it and creating a gap between itself and the outlet port through which the cooling liquid flows.

In accordance with a preferred embodiment, each shutter element 221, 222, 223 is movable axially along a respective axis of movement Y1-Y1, Y2-Y2, Y3-Y3.

Preferably, each axis of movement Y1-Y1, Y2-Y2, Y3-Y3 is orthogonal to the respective outlet port 121, 122, 123. In other words, for each outlet port 121, 122, 123 there is defined a respective imaginary sectional plane on which the edges that delimit the respective port substantially lie, or median with respect to the position of such edges, and the respective axis of movement Y1-Y1, Y2-Y2, Y3-Y3 is orthogonal to the respective imaginary plane defined. In still other words, each axis of movement Y1-Y1, Y2-Y2, Y3-Y3 is parallel to the flow direction of the cooling liquid through the respective outlet port 121, 122, 123.

In some preferred embodiments, said axes of movement Y1-Y1, Y2-Y2, Y3-Y3 are parallel to each other.

In other preferred embodiments, said axes of movement Y1-Y1, Y2-Y2, Y3-Y3 are incidental to each other.

According to a preferred embodiment of the invention, each shutter element 221, 222, 223 comprises a head element 2211, 2221, 2231 suitable to engage the edges of the respective outlet port 121, 122, 123.

Preferably, therefore, each head element 2211, 2221, 2231 has a shape substantially complementary to the respective outlet port 121, 122, 123 with which it operates in such a way as to intercept its edges. In particular, each head element 2211, 2221, 2231 comprises a sealing gasket suitable to operate a sealed obstruction.

According to some preferred embodiments, such as those shown in the accompanying figures, said head element 2211, 2221, 2231 extends axially with a tapered profile, preferably conical or frusto-conical, with circumferential sealing walls suitable to engage the edges of the respective outlet port 121, 122, 123. Preferably, on said walls, the head element 2211, 2221, 2231 comprises a sealing gasket.

In addition, according to that which is described, each shutter element 221, 222, 223 also comprises a control stem 2212, 2222, 2232 extending from the head element 2211, 2221, 2231 to engage the regulation member 21 and then move each in a predetermined axial position from the head element 2211, 2221, 2231.

Preferably, each control stem 2212, 2222, 2232 extends orthogonally from the respective head element 2211, 2221, 2231. In other words, with each shutter element 221, 222, 223 mounted, the respective control stem 2212, 2222, 2232 extends along the respective axis of movement Y1-Y1, Y2-Y2, Y3-Y3.

Preferably, each control stem 2212, 2222,

2232 is guided in axial movement by means of the regulation member 21 along the respective axis of movement Y1-Y1, Y2-Y2, Y3-Y3.

In other words, each shutter element 221, 222, 223 has a substantially "mushroom" shape, with a head and stem extending substantially orthogonally therefrom.

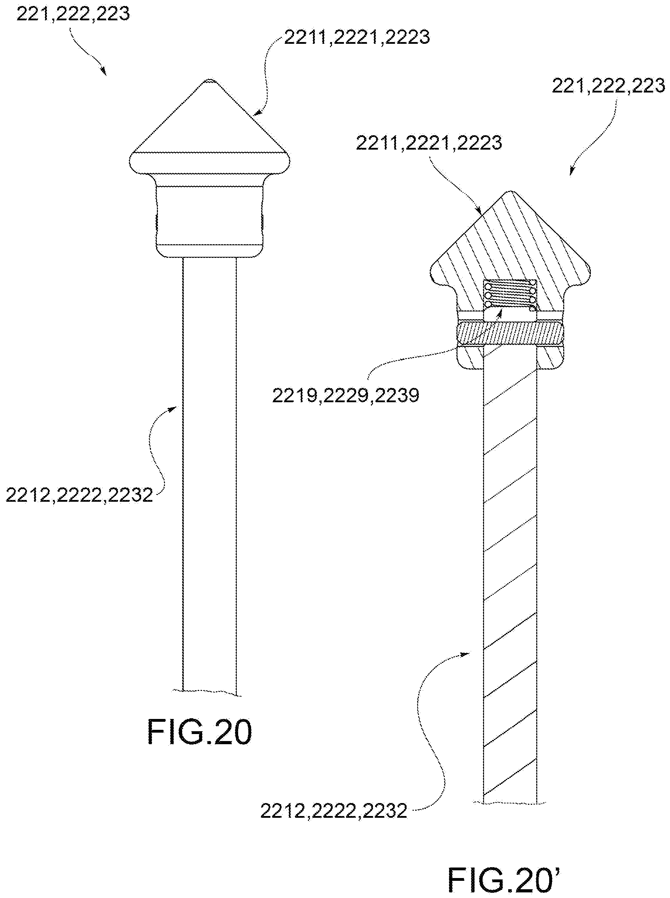

According to a preferred embodiment, such as that shown in figures 20, 20', the engagement between the head element 2211, 2221, 2231 and the control stem 2212, 2222, 2232 is obtained by means of elastic elements 2219, 2229, 2239 suitable to allow a recuperation of play and tolerances between the two. In other words, within the head element 2211, 2221, 2231, engaged by the control stem 2212, 2222, 2232, a yielding element is housed elastically suitable to perform the role of a compensation element.

Preferably, furthermore, the elastic elements 2219, 2229, 2239 are also suitable to facilitate the engagement of the head element 2211, 2221, 2231 with the edges defining the respective port 121, 122, 123.

According to a preferred embodiment, each control stem 2212, 2222, 2232 comprises a control end 2210, 2220, 2230 operatively connected to the regulation member 21.

In some preferred embodiments, each control end 2210, 2220, 2230 is placed on one end of the respective control stem 2212, 2222, 2232, opposite to that of the respective control head 2211, 2221, 2231.

Preferably, each control end 2210, 2220, 2230 is positioned in such a way as to lie on the respective axis of movement Y1-Y1, Y2-Y2, Y3-Y3.

In other preferred embodiments, each control end 2210, 2220, 2230 is positioned in such a way as to be transverse, preferably orthogonal, to the respective axis of movement Y1-Y1, Y2-Y2, Y3-Y3.

In addition, according to any one of the preferred embodiments, each shutter element 221, 222, 223 comprises a respective centering body 2215, 2225, 2235 suitable to maintain the predefined axial position relative to the respective outlet ports 121, 122, 123.

In other words, each centering body 2215, 2225, 2235 keeps the respective shutter element 221, 222, 223 in position to keep the respective head element 2211, 2221, 2231 centered along the respective axis of movement Y1-Y1, Y2-Y2, Y3-Y3, even in the positions wherein it is moved distally from the respective outlet port 121, 122, 123.

Preferably, the centering body 2215, 2225, 2235 is a discoidal element through which the respective control stem 2212, 2222, 2232 is housed and supported axially and in rotation.

Preferably, the centering body 2215, 2225, 2235 is held in position by the assembly body 100; preferably, the centering body 2215, 2225, 2235 is in geometric interference with the assembly body 100.

Moreover, preferably, each centering body 2215, 2225, 2235 has special openings through which the cooling liquid flows.

As stated, the regulation member 21 is operatively connected with the shutter elements 221, 222, 223 to guide them to a predefined position corresponding with a regulation of the amount of cooling liquid to a respective duct of the cooling system.

According to the invention, the regulation member 21 extends along a main axis X-X and is rotatable around said main axis X-X.

In accordance with the invention, the angular position of the regulation member 21 corresponds to a predefined position of the shutter elements 221, 222, 223 and hence a predefined regulation of the amount of cooling liquid to a respective duct of the cooling system.

According to a preferred embodiment, the regulation member 21 is designed to be able to continuously rotate 360° around the main axis X-X.

According to the invention, a given angular position of the regulation member 21 corresponds to a respective axial position of each shutter element 221, 222, 223.

The regulation member 21 comprises at least one cont rol passage 210 extending around the main axis X-X defining portions radially distal from the main axis X-X and portions radially proximal to the main axis X-X.

Preferably, each control passage 210 is recessed inside the outer walls of the regulation member 21.

In other words, circumferentially to the main axis X-X, the control member 21 comprises a track or a line or a hollow having some portions radially distal from the main axis X-X and other portions radially proximal to the main axis X-X. Preferably, therefore, the shutter element is positioned in a closed position as it interacts with the respective distal portion of the passage, and similarly, the shutter element is positioned in a progression of intermediate positions up to the open position, as a function of the distal portion of the control passage with which it interacts.

Each shutter element 221, 222, 223, and, in particular, the respective control end 2210, 2220, 2230, is engaged to said control passage 210. Preferably, the respective control end 2210, 2220, 2230 is housed in the control passage 210.

According to a preferred embodiment, the control ends and control passages are designed to have reciprocal shapes complementary to each other in order to facilitate their reciprocal engagement, while allowing their respective axial and rotational movements.

In some preferred embodiments, the control end has a rounded shape, or has a substantially spherical end suitable to be housed in the respective control passage.

In other preferred embodiments, the control end has a hinged transverse pin at the end of the control stem and is suitable to be housed in the respective control passage.

According to a preferred embodiment, for each shutter element 221, 222, 223, the control member 21 comprises a respective control passage 211, 212, 213.

Preferably, said control passages 211, 212, 213 are respectively axially spaced apart from each other.

In other words, each control end 2210, 2220, 2230 according to the respective preferred embodiment is engaged, housed, in a respective control passage 211, 212, 213.

According to a preferred embodiment, the regulation member 21 is arranged within the regulation chamber 10 in such a manner as to have the main axis X-X arranged in a direction substantially orthogonal to the axis of movement Y1-Y1, Y2-Y2, Y3-Y3.

In other words, preferably, the control member 21 is arranged in a substantially frontal position at the outlet ports 121, 122, 123.

In accordance with a preferred embodiment, the control member 21 has a substantially cylindrical shape with respect to the main axis X-X (for example, such embodiment is shown in the embodiments of figures 2 to 14) .

According to a further preferred embodiment, the regulation member 21 is arranged within the regulation chamber 10 in such a way as to have the main axis X-X arranged in a direction substantially parallel to the axes of movement Y1-Y1, Y2-Y2, Y3-Y3.

However, according to a still further preferred embodiment, the regulation member 21 is arranged within the regulation chamber 10 in such a way as to have the main axis X-X arranged in a direction with respect to the axes of movement Y1-Y1, Y2-Y2, Y3-Y3 so that said axes converge thereon.

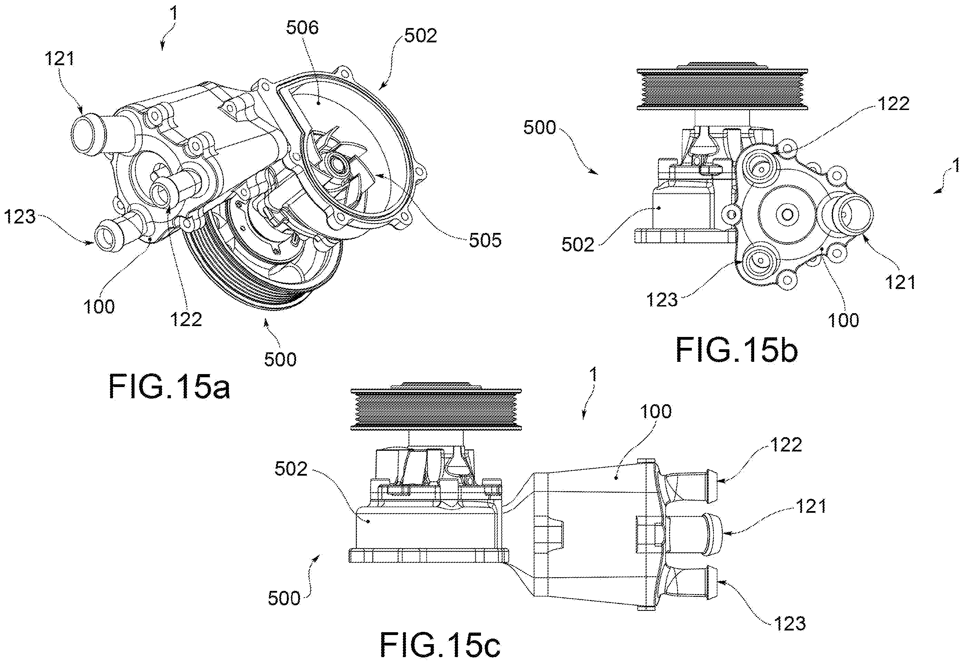

An example of such embodiments is shown in figures 15 to 19.

According to a preferred embodiment, the control member 21 is located in a region defined by the axes of movement Y1-Y1, Y2-Y2, Y3-Y3.

Preferably, the control member 21 has a substantially conical shape with respect to the main axis.

In accordance with a preferred embodiment, the regulation assembly 1 also comprises an electric motor device 50 operatively connected with the regulation member 21 for controlling its rotation around the main axis X-X and placing it in a predefined angular position.

Preferably, the electric motor device 50 is mountable on the assembly body 100.

Preferably, the regulation member 21 has a member end 215 extending externally from the assembly body 100 on which the electric motor device 50 is engageable to guide the regulation member 21 in rotation.

In accordance with the foregoing description, the object of the present invention is a pump group 500 for a cooling system 900 of a vehicle comprising a pump body 502, an impeller 505 suitable to draw in cooling fluid through a suction section and to deliver said cooling liquid under pressure in a delivery duct 506 comprised in the pump body 2, preferably by extension of the circuit within which the impeller 505 operates.

According to the invention, the pump group 500 also comprises a regulation assembly 1 as previously described, fluidically connected to said delivery duct 506 through its inlet port 11.

In addition, also object of the present invention is a cooling system 900 of a vehicle comprising a pump group 500 and a regulation assembly 1 according to the foregoing description.

Said cooling system 900 comprises an engine cooling duct in which the cooling liquid flows through a first outlet port 121 and at least one secondary duct in which the cooling liquid flows passing through at least one second outlet port 122, 123. In further embodiments of the cooling system 900, the engine cooling duct in which the cooling liquid flows after its passage from the first outlet port 121 extends into a first main portion of the engine, while the at least one secondary duct, into which the cooling liquid flows after its passage into at least one second outlet port 122, 123, extends into other secondary portions of the engine.

Innovatively, the regulation assembly object of the present invention fully satisfies the predefined object, i.e. to provide a regulation assembly wherein it is possible to regulate in a customized way, i.e. according to the requirements and as the conditions of use of the vehicle vary, the cooling mode of the engine or a portion of it or other components of the vehicle served by the cooling system, without having any drawbacks due to the cooling of one component rather than another.

Likewise, the pump group which comprises the regulation assembly and the cooling system which comprises such regulation assembly are also suitable to fully satisfy such needs and requirements.

Advantageously, therefore, the regulation assembly is suitable to perform the regulation operations in an optimal way, regardless of the modes of opening or closing one duct rather than another.

Advantageously, the regulation assembly allows for a simple and discreet regulation of the amount of cooling liquid passing through a predefined duct of a cooling system. In other words, advantageously, the regulation assembly is suitable to define for each shutter element a precise axial position to which a predetermined amount of cooling liquid corresponds. In other words, the regulation means are configurable by means of an electric motor in the proper precise regulation configurations. In addition, advantageously, the shutter elements are mechanically adjustable to move axially in a plurality of precise, discreet positions.

Also, advantageously, the regulation of the passage through an outlet port does not affect the respective shutter element acting on the other outlet ports.

Further advantageously, the regulation assembly is continuously adjustable while the vehicle is in motion, providing constant regulations of the respective shutter elements during the use of the vehicle, and while being subjected to different ambient conditions, such as a climb or a descent.

Advantageously, depending on the needs, by knowing the mathematics and geometry of each control passage, the shutter element is adjustable in a desired axial (intermediate) position.

A further advantage lies in the fact that the shutter elements are substantially moved in the direction of motion of the flow and consequently are suitable not to generate excessive load losses, such as solutions wherein the shutters are moved orthogonally in the direction of the fluid's motion.

Advantageously, the described invention is integrable on a plurality of variants of embodiment for the purpose of regulating and controlling the passage of cooling liquid in a plurality of outlet ducts.

In addition, advantageously, the adjustment assembly is compact in size and therefore particularly suitable to be integrated in the automotive sector, as it is located in the engine compartment of a vehicle.

Advantageously, the regulation assembly, and in particular the regulation means, are designed and arranged in the regulation chamber to minimize the load losses of the cooling liquid. Advantageously, therefore, the regulation means are adapted to facilitate as far as possible the flow of the cooling liquid; in other words, advantageously, the various components housed in the regulation chamber have fluid-dynamically optimized shapes in order to minimize load losses.

Advantageously, the regulation assembly is integrable into the pump group itself by providing its positioning in the delivery duct.

It is evident that a person skilled in the art, in order to satisfy contingent requirements, may make changes to the regulation assembly, the pump group, and the cooling system described above, all fully contained within the scope of protection as defined by the following claims.

## Claims

1. A regulation assembly (1) of a water pump group (500) for a cooling system (900) of a vehicle, for example of its engine, positionable downstream of said pump group (500), wherein the regulation assembly (1) comprises:
- at least one inlet port (11) through which the cooling liquid flows in from the pump group (500);
- at least two outlet ports (121, 122, 123) through which the outbound cooling liquid flows;
- a regulation chamber (10) located between the inlet port (11) and the outlet ports (121, 122, 123);
- regulation means (20) housed in the regulation chamber (10) comprising:
i) at least two shutter elements (221, 222, 223) operating with the respective outlet port (121, 122, 123), wherein each shutter element (221, 222, 223) is movable in an axial direction substantially orthogonal to the respective outlet port (121, 122, 123) between a closed position, in which the outlet port is occluded, a plurality of intermediate positions distal from the outlet port and an open position corresponding to the maximum opening of the outlet port (121, 122, 123);
ii) a regulation member (21) operatively connected with the shutter elements (221, 222, 223), which extends along a main axis (X-X) and is rotatable about said main axis (X-X), in such a way that one of its respective angular positions corresponds to a predefined position of the shutter elements (221, 222, 223) and thus to a regulation of the quantity of cooling liquid towards a respective duct of the cooling system;
wherein the regulation assembly (1) is **characterized by** the fact that the regulation member (21) comprises at least one control passage (210) that extends around the main axis (X-X) defining portions radially distal from the main axis (X-X) and portions radially proximal to the main axis (X-X), wherein each shutter element (221, 222, 223) comprises a control end (2210, 2220, 2230) engaged to said control passage (210).

2. Regulation assembly (1) according to claim 1, wherein the regulation member (21), for each shutter element (221, 222, 223), comprises, axially spaced apart, respective control passages (211, 212, 213) each engaged by respective control end (2210, 2220, 2230).

3. Regulation assembly (1) according to claim 2, wherein each control passage (210) is recessed inside of the outer walls of the regulation member (21).

4. Regulation assembly (1) according to any of the preceding claims, wherein each shutter element (221, 222, 223) is movable axially along a respective movement axis (Y1-Y1, Y2-Y2, Y3-Y3), wherein the main axis (X-X) has a direction substantially orthogonal to said movement axes (Y1-Y1, Y2-Y2, Y3-Y3).

5. Regulation assembly (1) according to claim 4, wherein the control member (21) is disposed in a position substantially frontal to the outlet ports (121, 122, 123) .

6. Regulation assembly (1) according to any of claims 4 or 5, wherein the control member (21) has a substantially cylindrical shape with respect to the main axis (X-X).

7. Regulation assembly (1) according to any of claims 1 to 3, wherein each shutter element (221, 222, 223) is movable axially along a respective movement axis (Y1-Y1, Y2-Y2, Y3-Y3), wherein the main axis (X-X) has a direction substantially parallel to said movement axes (Y1-Y1, Y2-Y2, Y3-Y3) or the main axis (X-X) has a direction such that the movement axes (Y1-Y1, Y2-Y2, Y3-Y3) converge on it.

8. Regulation assembly (1) according to claim 7, wherein the control member (21) is located in a region defined by the movement axes (Y1-Y1, Y2-Y2, Y3-Y3).

9. Regulation assembly (1) according to any of claims 7 or 8, wherein the control member (21) has a substantially conical shape with respect to the main axis.

10. Regulation assembly (1) according to any one of the preceding claims, wherein each shutter element (221, 222, 223) comprises a head element (2211, 2221, 2231) suitable to engage the edges of the respective outlet port (121, 122, 123) and a control stem (2212, 2222, 2232) extending from the head element (2211, 2221, 2231) to engage the regulation member (21) comprising the control end (2210, 2220, 2230).

11. Regulation assembly (1) according to claim 10, wherein the head element (221, 222, 223) extends axially with a tapered profile, preferably conical or frusto-conical, presenting circumferentially sealing walls suitable to engage the edges of the respective outlet port (121, 122, 123).

12. Regulation assembly (1) according to any one of the preceding claims, wherein each control end (2210, 2220, 2230) is housed in the control passage (210).

13. Regulation assembly (1) according to any of the preceding claims, wherein each shutter element (221, 222, 223) comprises a centering body (2215, 2225, 2235) suitable to maintain the predefined axial position relative to the outlet ports (121, 122, 123)

14. Regulation assembly (1) according to any of the preceding claims, comprising an electric motor device (50) operatively connected with the regulation member (21) for controlling its rotation around the main axis (X-X) and place it in a predefined angular position.

15. A pump group (500) for a cooling system (900) of a vehicle, comprising:
- a pump body (502);
- an impeller (505) suitable to aspirate cooling liquid through an aspiration section and send said cooling liquid under pressure to a delivery duct (506) comprised in the pump body (2);
- a regulation assembly (1) according to any of the preceding claims, fluidically connected to said delivery duct (506) through its inlet port (11).

16. A cooling system (900) of a vehicle, comprising a pump group (500) and a regulation assembly (1) according to any of the preceding claims, wherein the cooling system (900) comprises an engine cooling duct in which the cooling liquid flows through a first outlet port (121) and at least one secondary duct in which the cooling liquid flows through at least one second outlet port (122, 123).

## Patentansprüche

1. Regulierungsanordnung (1) einer Wasserpumpengruppe (500) für ein Kühlungssystem (900) eines Fahrzeugs, beispielsweise seines Motors, welche stromabwärts der Pumpengruppe (500) positionierbar ist, wobei die Regulierungsanordnung (1) umfasst:
- wenigstens eine Einlassöffnung (11), durch welche die Kühlungsflüssigkeit von der Pumpengruppe (500) einströmt;
- wenigstens zwei Auslassöffnungen (121, 122, 123), durch welche die ausgehende Kühlungsflüssigkeit strömt;
- eine Regulierungskammer (10), welche zwischen der Einlassöffnung (11) und den Auslassöffnungen (121, 122, 123) positioniert ist;
- ein Regulierungsmittel (20), welches in der Regulierungskammer (10) aufgenommen ist, umfassend:
i) wenigstens zwei Verschlusselemente (221, 222, 223), welche mit der jeweiligen Auslassöffnung (121, 122, 123) wirken, wobei jedes Verschlusselement (221, 222, 223) in einer axialen Richtung im Wesentlichen orthogonal zu der jeweiligen Auslassöffnung (121, 122, 123) zwischen einer geschlossenen Position, in welcher die Auslassöffnung verdeckt ist, einer Mehrzahl von der Auslassöffnung distaler Zwischenpositionen und einer offenen Position bewegbar ist, welche der maximalen Öffnung der Auslassöffnung (121, 122, 123) entspricht;
ii) ein Regulierungselement (21), welches betriebsmäßig mit den Verschlusselementen (221, 222, 223) verbunden ist und welches sich entlang einer Hauptachse (X-X) erstreckt und um die Hauptachse (X-X) rotierbar ist, derart, dass eine seiner jeweiligen Winkelpositionen einer vordefinierten Position der Verschlusselemente (221, 222, 223) und damit einer Regulierung der Menge von Kühlungsflüssigkeit in Richtung einer jeweiligen Leitung des Kühlungssystems entspricht;
wobei die Regulierungsanordnung (1) durch die Tatsache gekennzeichnet ist, dass das Regulierungselement (21) wenigstens einen Steuerungsdurchgang (210) umfasst, welcher sich um die Hauptachse (X-X) erstreckt, wobei von der Hauptachse (X-X) radial distale Abschnitte und zu der Hauptachse (X-X) radial proximale Abschnitte definiert sind, wobei jedes Verschlusselement (221, 222, 223) ein Steuerungsende (2210, 2220, 2230) umfasst, welches mit dem Steuerungsdurchgang (210) in Eingriff steht.

2. Regulierungsanordnung (1) nach Anspruch 1, wobei das Regulierungselement (21) für jedes Verschlusselement (221, 222, 223) axial beabstandet jeweilige Steuerungsdurchgänge (211, 212, 213) umfasst, welche durch ein jeweiliges Steuerungsende (2210, 2220, 2230) in Eingriff genommen ist.

3. Regulierungsanordnung (1) nach Anspruch 2, wobei jeder Steuerungsdurchgang (210) innerhalb der Außenwände des Regulierungselements (21) vertieft ist.

4. Regulierungsanordnung (1) nach einem der vorhergehenden Ansprüche, wobei jedes Verschlusselement (221, 222, 223) entlang einer jeweiligen Bewegungsachse (Y1-Y1, Y2-Y2, Y3-Y3) axial bewegbar ist, wobei die Hauptachse (X-X) eine zu den Bewegungsachsen (Y1-Y1, Y2-Y2, Y3-Y3) im Wesentlichen orthogonale Richtung aufweist.

5. Regulierungsanordnung (1) nach Anspruch 4, wobei das Steuerungselement (21) in einer zu den Auslassöffnungen (121, 122, 123) im Wesentlichen frontalen Position angeordnet ist.

6. Regulierungsanordnung (1) nach einem der Ansprüche 4 oder 5, wobei das Steuerungselement (21) eine in Bezug auf die Hauptachse (X-X) im Wesentlichen zylindrische Form aufweist.

7. Regulierungsanordnung (1) nach einem der Ansprüche 1 bis 3, wobei jedes Verschlusselement (221, 222, 223) entlang einer jeweiligen Bewegungsachse (Y1-Y1, Y2-Y2, Y3-Y3) axial bewegbar ist, wobei die Hauptachse (X-X) eine zu den Bewegungsachsen (Y1-Y1, Y2-Y2, Y3-Y3) im Wesentlichen parallele Richtung aufweist oder die Hauptachse (X-X) eine derartige Richtung aufweist, dass die Bewegungsachsen (Y1-Y1, Y2-Y2, Y3-Y3) an dieser konvergieren.

8. Regulierungsanordnung (1) nach Anspruch 7, wobei das Steuerungselement (21) in einem Bereich angeordnet ist, welcher durch die Bewegungsachsen (Y1-Y1, Y2-Y2, Y3-Y3) definiert ist.

9. Regulierungsanordnung (1) nach einem der Ansprüche 7 oder 8, wobei das Steuerungselement (21) eine in Bezug auf die Hauptachse im Wesentlichen konische Form aufweist.

10. Regulierungsanordnung (1) nach einem der vorhergehenden Ansprüche, wobei jedes Verschlusselement (221, 222, 223) ein Kopfelement (2211, 2221, 2231), welches dazu geeignet ist, mit den Rändern der jeweiligen Auslassöffnung (121, 122, 123) einzugreifen, und einen Steuerschaft (2212, 2222, 2232) umfasst, welcher sich von dem Kopfelement (2211, 2221, 2231) erstreckt, um mit dem Regulierungselement (21) einzugreifen, welches das Steuerungsende (2210, 2220, 2230) umfasst.

11. Regulierungsanordnung (1) nach Anspruch 10, wobei sich das Kopfelement (221, 222, 223) axial mit einem verjüngten, vorzugsweise konischen oder kegelstumpfförmigen, Profil erstreckt, wobei es in Umfangsrichtung Dichtungswände aufweist, welche dazu geeignet sind, mit den Rändern der jeweiligen Auslassöffnung (121, 122, 123) einzugreifen.

12. Regulierungsanordnung (1) nach einem der vorhergehenden Ansprüche, wobei jedes Steuerungsende (2210, 2220, 2230) in dem Steuerungsdurchgang (210) aufgenommen ist.

13. Regulierungsanordnung (1) nach einem der vorhergehenden Ansprüche, wobei jedes Verschlusselement (221, 222, 223) einen Zentrierkörper (2215, 2225, 2235) umfasst, welcher dazu geeignet ist, die vordefinierte axiale Position relativ zu den Auslassöffnungen (121, 122, 123) aufrechtzuerhalten.

14. Regulierungsanordnung (1) nach einem der vorhergehenden Ansprüche, umfassend eine elektrische Motorvorrichtung (50), welche betriebsmäßig mit dem Regulierungselement (21) verbunden ist, um seine Rotation um die Hauptachse (X-X) zu steuern und es in einer vordefinierten Winkelposition zu platzieren.

15. Pumpengruppe (500) für ein Kühlungssystem (900) eines Fahrzeugs, umfassend:
- einen Pumpenkörper (502);
- einen Impeller (505), welcher dazu geeignet ist, Kühlungsflüssigkeit durch einen Ansaugabschnitt anzusaugen und die Kühlungsflüssigkeit unter Druck zu einer Zuführleitung (506) zu senden, welche in dem Pumpenkörper (2) umfasst ist;
- eine Regulierungsanordnung (1) gemäß einem der vorhergehenden Ansprüche, welche durch ihre Einlassöffnungen (11) fluidisch mit der Zuführleitung (506) verbunden ist.

16. Kühlungssystem (900) eines Fahrzeugs, umfassend eine Pumpengruppe (500) und eine Regulierungsanordnung (1) gemäß einem der vorhergehenden Ansprüche, wobei das Kühlungssystem (900) eine Motorkühlleitung, in welcher die Kühlungsflüssigkeit durch eine erste Auslassöffnung (121) strömt, und wenigstens eine sekundäre Leitung umfasst, in welcher die Kühlungsflüssigkeit durch wenigstens eine zweite Auslassöffnung (122, 123) strömt.

## Revendications

1. Système de régulation (1) d'un groupe pompe à eau (500) pour un système de refroidissement (900) d'un véhicule, par exemple de son moteur, pouvant être disposé en aval du groupe pompe (500), le système de régulation (1) comprenant :
- au moins un port d'entrée (11) par lequel le liquide de refroidissement entre du groupe pompe (500),
- au moins deux ports de sortie (121, 122, 123) par lesquels le liquide de refroidissement partant sort,
- une chambre de régulation (10) située entre le port d'entrée (11) et les ports de sortie (121, 122, 123),
- des moyens de régulation (20), logés dans la chambre de régulation (10), comportant :
i) au moins deux éléments de fermeture (221, 222, 223) fonctionnant avec le port de sortie (121, 122, 123) correspondant, chaque élément de fermeture (221, 222, 223) étant mobile dans une direction axiale sensiblement perpendiculaire au port de sortie (121, 122, 123) correspondant entre une position de fermeture dans laquelle le port de sortie est fermé, une pluralité de positions intermédiaires espacées du port de sortie et une position d'ouverture correspondant à l'ouverture maximale du port de sortie (121, 122, 123),
ii) un élément de régulation (21) fonctionnellement relié aux éléments de fermeture (221, 222, 223), qui s'étend le long d'un axe principal (X-X) et est rotatif autour dudit axe principal (X-X) de façon telle qu'une de ses positions angulaires corresponde à une position prédéterminée des éléments de fermeture (221, 222, 223) et ainsi à une régulation de la quantité de liquide de refroidissement vers un conduit correspondant du système de refroidissement,
le système de régulation (1) étant **caractérisé par le fait que** l'élément de régulation (21) comprend au moins un passage de commande (210) qui s'étend autour de l'axe principal (X-X) définissant des parties radialement éloignées de l'axe principal (X-X) et des parties radialement proches de l'axe principal (X-X), chaque élément de fermeture (221, 222, 223) comprenant une extrémité de commande (2210, 2220, 2230) engagée dans ledit passage de commande (210).

2. Système de régulation (1) selon la revendication 1, **caractérisé en ce que** l'élément de régulation (21) comprend pour chaque élément de fermeture (221, 222, 223) des passages de commande (211, 212, 213) correspondants axialement espacés dans chacun desquels une extrémité de commande (2210, 2220, 2230) est engagée.

3. Système de régulation (1) selon la revendication 2, **caractérisé en ce que** chaque passage de commande (210) est en retrait à l'intérieur des parois extérieurs de l'élément de régulation (21).

4. Système de régulation (1) selon l'une des revendications précédentes, **caractérisé en ce que** chaque élément de fermeture (221, 222, 223) est axialement mobile le long d'un axe de déplacement (Y1-Y1, Y2-Y2, Y3-Y3) correspondant, l'axe principal (X-X) ayant une direction sensiblement perpendiculaire aux axes de déplacement (Y1-Y1, Y2-Y2, Y3-Y3).

5. Système de régulation (1) selon la revendication 4, **caractérisé en ce que** l'élément de commande (21) est disposé dans une position sensiblement frontale aux ports de sortie (121, 122, 123).

6. Système de régulation (1) selon l'une des revendications 4 ou 5, **caractérisé en ce que** l'élément de commande (21) présente une forme sensiblement cylindrique par rapport à l'axe principal (X-X).

7. Système de régulation (1) selon l'une des revendications 1 à 3, **caractérisé en ce que** chaque élément de fermeture (221, 222, 223) est axialement mobile le long d'un axe de déplacement (Y1-Y1, Y2-Y2, Y3-Y3) correspondant, l'axe principal (X-X) ayant une direction sensiblement parallèle aux axes de déplacement (Y1-Y1, Y2-Y2, Y3-Y3) ou l'axe principal (X-X) ayant une direction telle que les axes de déplacement (Y1-Y1, Y2-Y2, Y3-Y3) convergent vers lui.

8. Système de régulation (1) selon la revendication 7, **caractérisé en ce que** l'élément de commande (21) est situé dans une zone définie par les axes de déplacement (Y1-Y1, Y2-Y2, Y3-Y3).

9. Système de régulation (1) selon l'une des revendications 7 ou 8, **caractérisé en ce que** l'élément de commande (21) présente une forme sensiblement conique par rapport à l'axe principal.

10. Système de régulation (1) selon l'une des revendications précédentes, **caractérisé en ce que** chaque élément de fermeture (221, 222, 223) comprend un élément de tête (2211, 2221, 2231) adapté pour s'engager dans les bords du port de sortie (121, 122, 123) correspondant et une tige de commande (2212, 2222, 2232) s'étendant à partir de l'élément de tête (2211, 2221, 2231) pour s'engager dans l'élément de régulation (21) comprenant l'extrémité de commande (2210, 2220, 2230).

11. Système de régulation (1) selon la revendication 10, **caractérisé en ce que** l'élément de tête (221, 222, 223) s'étend axialement avec un profile conique, de préférence d'un cône ou d'un cône tronqué, ayant des parois étanches circonférentiels adaptés pour s'engager dans les bords du port de sortie (121, 122, 123) correspondant.

12. Système de régulation (1) selon l'une des revendications précédentes, **caractérisé en ce que** chaque extrémité de commande (2210, 2220, 2230) est logé dans le passage de commande (210).

13. Système de régulation (1) selon l'une des revendications précédentes, **caractérisé en ce que** chaque élément de fermeture (221, 222, 223) comprend un corps de centrage (2215, 2225, 2235) adapté pour maintenir la position axiale prédéterminée par rapport aux ports de sortie (121, 122, 123).

14. Système de régulation (1) selon l'une des revendications précédentes, comprenant un dispositif à moteur électrique (50) fonctionnellement relié à l'élément de régulation (21) pour commander la rotation de celui-ci autour de l'axe principal (X-X) et le placer dans une position angulaire prédéterminée.

15. Groupe pompe (500) pour un système de refroidissement (900) d'un véhicule, comprenant :
- un corps de pompe (502),
- une turbine (505) adaptée pour aspirer du liquide de refroidissement par une partie d'aspiration et pour envoyer le liquide de refroidissement sous pression vers un conduit de sortie (506) compris dans le corps de pompe (2),
- un système de régulation (1) selon l'une des revendications précédentes, fluidiquement relié au conduit de sortie (506) par son port d'entrée (11).

16. Système de refroidissement (900) d'un véhicule comprenant un groupe pompe (500) et un système de régulation (1) selon l'une des revendications précédentes, le système de refroidissement (900) comprenant un conduit de refroidissement de moteur dans lequel coule le liquide de refroidissement par un premier port de sortie (121) et au moins un deuxième conduit dans lequel le liquide de refroidissement coule par au moins un deuxième port de sortie (122, 123).
